# EUROPÄISCHE PATENTSCHRIFT

(11) **EP 1 693 175 B1**
(45) Veröffentlichungstag und Bekanntmachung des Hinweises auf die Patenterteilung: **14.03.2018**
(21) Anmeldenummer: 05024490.4
(22) Anmeldetag: 10.11.2005
(51) Int. Cl.: B29C 45/14, B29L 31/30, B29K 705/00

(54) **Verfahren zum Herstellen eines Kraftfahrzeug-Ausstattungsteils durch Hinterspritzen einer Metallfolie**
Process for manufacturing an automotive part by overmoulding a metal sheet
Procédé de fabrication d'une pièce d'équipement de véhicule automobile par surmoulage une feuille métallique

(30) Priorität: 19.02.2005 DE 102005007645
(43) Veröffentlichungstag der Anmeldung: 23.08.2006
(73) Patentinhaber: Dr. Ing. h.c. F. Porsche AG, 70435 Stuttgart (DE)
(72) Erfinder: Benkler, Olaf, 75242 Neuhausen/Schellbronn (DE); Düpjohann, Reinhard, 71272 Renningen-Malmsheim (DE)

(56) Entgegenhaltungen:
- WO-A1-2004/000524
- DE-A1- 10 211 171
- DE-A1- 10 243 405
- DE-C- 244 267
- GB-A- 2 030 068
- ADAC TESTERGEBNIS NOTE: "Porsche Cayenne Turbo Tiptronic", , 1 October 2003 (2003-10-01), pages 1-4, XP055280497, Retrieved from the Internet: URL:https://www.adac.de/_ext/itr/tests/Aut otest/AT1085_Porsche_Cayenne_Turbo_Tiptron ic/Porsche_Cayenne_Turbo_Tiptronic.pdf [retrieved on 2016-06-14]

## Beschreibung

Bei der Erfindung wird ausgegangen von einem Verfahren zum Herstellen eines Kraftfahrzeug-Ausstattungsteils, bei dem eine Metallfolie im wesentlichen vollflächig mit einem Kunststoff hinterspritzt wird. Aus der DE 24 44 267 A ist ein Verfahren bekannt, nach dem Autoteile hergestellt werden können. Dazu wird eine Metallfolie an ihrer Rückseite im wesentlichen vollflächig mit einem Kunststoff in einer Form hinterspritzt. Das fertige Autoteil weist eine Fertig- bzw. Endform auf, wobei die Metallfolie vor dem Hinterspritzen in eine zumindest in einer ersten Richtung verlaufende gebogene Vorform gebracht wird, in der sie mit ihren seitlichen Flanschen in der Trennebene der Form geklemmt wird. Danach wird die so verformte Metallfolie mit dem Kunststoff hinterspritzt, so dass sie sich an die Wände der Form anlegt und ihre Endform einnimmt. Die Endform weicht demgemäß von der Vorform ab.

Die GB 2 030 068 A beschreibt für mit Kunststoff hinterspritzte Folien eine verzerrte Endform des Bauteils, die durch unterschiedliches Schrumpfverhalten der verwendeten Materialen beim Abkühlen des Bauteils hervorgerufen wird. Zur Vermeidung dieses Effekt wird die Folie mit Verstärkungsstegen an dem Kunststoffträger versehen. Für flache bzw. ebene Flächen kann die Folie in eine konkave Vorform in der Spritzgussform gebracht werden.

Ein Verfahren zum Herstellen eines Kraftfahrzeug-Ausstattungsteils ist aus der DE 102 11 171 A1 bekannt. Nach diesem Herstellverfahren wird in eine Kavität eines Werkzeugs eine Metallfolie eingelegt und der freibleibende Raum in der Kavität mit einem Kunststoff gefüllt, so dass die Metallfolie im wesentlichen vollständig mit diesem Kunststoff hinterspritzt wird. Das fertige Ausstattungsteil seiner Fertig- bzw. Endform in das Kraftfahrzeug, beispielsweise als Verkleidungsteil, eingesetzt. Aus dieser DE 102 11 171 A1 kann ferner entnommen werden, dass die Metallfolie aus einem Edelstahl besteht und beispielsweise eine Materialdicke aufweist, die größer als 0,3 mm ist.

Aus der DE 103 43 259 Al ist es außerdem bekannt, ein Automobilbauteil aus einer mit Kunststoff hinterspritzten Metallfolie herzustellen und einer Behandlung mit einem Plasmastrahl zu unterziehen. Dadurch sollen die beim Hinterspritzen der Metallfolie erforderlichen Kunststoff-Temperaturen verringert werden können.

Ferner ist in der DE 34 31 666 Al ein Herstellverfahren beschrieben, demgemäß Holzplatten mit einer Kunststoff-Umrandung durch Aufspritzen produziert werden können. Die Kunststoff-Umrandung weist einen unsymmetrischen Querschnitt auf. Vor dem Aufspritzen des Kunststoffs auf den Randbereich wird die Holzplatte in eine vorgespannte, gewölbte Form gebracht, um die von dem unsymmetrischen Querschnitt der Umrandung ausgehenden Sehrumpfkräfte ausgleichen zu können.

Die WO 2004/000524 A1 und die DE 102 43 405 A1 offenbaren jeweils Verfahren zum Hinterspritzen von Metallblechen, welche Vertiefungen bzw. Erhebungen aufweisen.

Aufgabe der Erfindung ist es, ein Verfahren der eingangs genannten Art zum Herstellen eines Kraftfahrzeug-Ausstattungsteils anzugeben, nach dem die Ausstattungsteile eine hohe Qualität und Funktionalität aufweisen.

Gelöst wird diese Aufgabe mit einem Verfahren zum Herstellen eines Kraftfahrzeug-Ausstattungsteils, welches die in Anspruch 1 genannten Merkmale aufweist. Ausgestaltungen der Erfindung sind in den Unteransprüchen angegeben.

Die mit der Erfindung hauptsächlich erzielten Vorteile sind darin zu sehen, dass Kraftfahrzeug-Ausstattungsteile hergestellt werden können, die eine präzise Fertig- bzw. Endform aufweisen. Beim Herstellen derartiger Verbundbauteile, die aus einer vollflächig mit Kunststoff hinterspritzten Metallfolie bestehen, kann es aufgrund von unterschiedlichen Wärmeausdehnungskoeffizienten der verwendeten Materialien dazu kommen, dass sich die Form des Ausstattungsteil beim Abkühlen verändert, insbesondere in eine ungewünschte Richtung wölbt bzw. durchbiegt, wie dies in ähnlicher Weise bei dem so genannten Bimetall-Effekt auftritt. Durch das erfindungsgemäße Aufprägen einer Biegung bzw. einer Wölbung auf die zu hinterspritzende Metallfolie wird zwar dieser Bimetall-Effekt nicht unterbunden, jedoch weist das abgekühlte Ausstattungsteil später die gewünschte Fertig- bzw. Endform auf, wenn sich das Ausstattungsteil durch diesen Bimetall-Effekt beim Abkühlen in die gewünschte Fertig- bzw. Endform verformt. Mit dem erfindungsgemäßen Herstellverfahren lassen sich insbesondere Kraftfahrzeug-Ausstattungsteile für einen Kofferraumboden herstellen, die sich über eine wesentliche Breite bzw. Länge des Kraftfahrzeugs erstrecken und die Schutzteile für den Kofferraumboden darstellen, wofür Erhebungen auf dem Ausstattungsteil dienen. Diese Erhebungen werden durch Sicken in der Metallfolie herstellt, die mit Kunststoff gefüllt sind. Insbesondere bei derartigen Ausstattungsteilen kann dieser Bimetall-Effekt durch die Länge des Ausstattungsteil, insbesondere an den Enden des Ausstattungsteils verstärkt auftreten. Durch das Vorspannen in der Metallfolie in die gebogene Vorform lässt sich jedoch ein Ausstattungsteil mit der hinterspritzten Metallfolie herstellen, welches Maß- und Passgenau in das Kraftfahrzeug eingesetzt werden kann.

Es hat sich gezeigt, dass die Fertig- bzw. Endform des Ausstattungsteils weiter günstig beeinflusst werden kann, wenn der jeweilige Biegewinkel der gebogenen Vorform in Richtung eines Randes der Metallfolie zunehmend größer gewählt wird. Bevorzugt kann nach einer Weiterbildung die Metallfolie für die Vorform zusätzlich zur ersten Biegerichtung in einer zweiten Biegerichtung verformt werden. Die Biegerichtungen für die Vorform können also in Richtung der Länge und/oder Breite des Ausstattungsteils und/oder quer verlaufen. So wäre es denkbar, dass die Metallfolie in eine Art kalottenförmige Vorform gebracht wird.

Die Erfindung wird nachfolgend anhand eines Ausführungsbeispiels mit Bezug auf die Zeichnung näher erläutert. Es zeigen:
- Fig. 1: in einer Perspektive ein Kraftfahrzeug-Ausstattungsteil in seiner Fertig- bzw. Endform,
- Fig. 2: einen Schnitt durch das in ein Kraftfahrzeug eingesetzte Ausstattungsteil nach Fig. 1,
- Fig.3-5: jeweils einen Schnitt durch das Ausstattungsteil nach Fig. 1, wobei sowohl die Fertig- bzw. Endform als auch die Vorform des Ausstattungsteils eingezeichnet sind und
- Fig. 6: einen Schnitt durch ein schematisch dargestelltes Werkzeug mit einer Kavität zum Herstellen eines Ausstattungsteils.

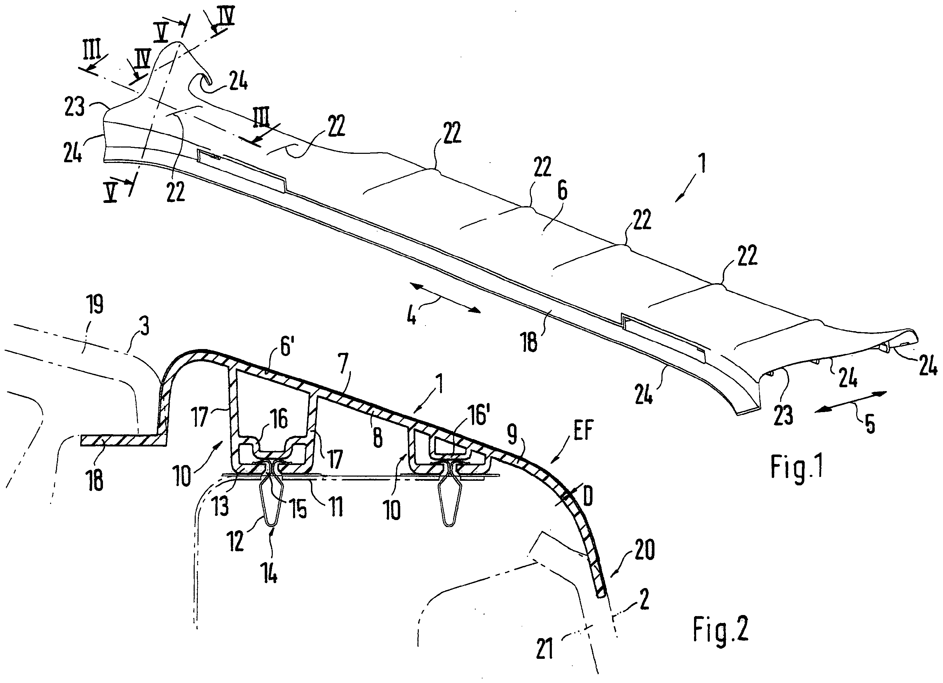

Anhand der Fig. 1 und 2 wird nachfolgend ein im folgenden lediglich als Ausstattungsteil 1 bezeichnetes Kraftfahrzeug-Ausstattungsteil näher erläutert. Insbesondere handelt es sich dabei um ein Innenausstattungsteil für einen hier nicht näher dargestellten Fahrzeuginnenraum bzw. als Ausstattungsteil 1 für einen Kofferraumboden 2 gemäß Fig. 2. Der Kofferraumboden 2 ist im Ausführungsbeispiel gestuft ausgeführt und geht über das Ausstattungsteil 1 in eine so genannte Hutablage 3 über. Hutablage 3 und Kofferraum 2 sind also Bestandteil eines einzigen Fahrzeuginnenraums. Das Ausstattungsteil 1 weist - gemäß Fig. 1 - eine in Pfeilrichtung 4 gemessene Länge und eine in Pfeilrichtung 5 gemessene Breite auf, wobei ersichtlich ist, dass die Länge wesentlich größer als die Breite gewählt ist. Fig. 2 zeigt demnach einen Schnitt in Richtung der Breite 5 des Ausstattungsteils 1. Die Länge 4 des Ausstattungsteils 1 kann derart gewählt sein, dass es sich über nahezu die gesamte Innenraumbreite des Kraftfahrzeugs oder über einen wesentlichen Teil dieser Breite erstreckt. Bei Verwendung des Ausstattungsteils 1, beispielsweise als Schwellerverkleidung, erstreckt es sich somit über eine wesentliche Länge des Kraftfahrzeugs 1, insbesondere über die Länge des Türausschnitts im Schwellerbereich.

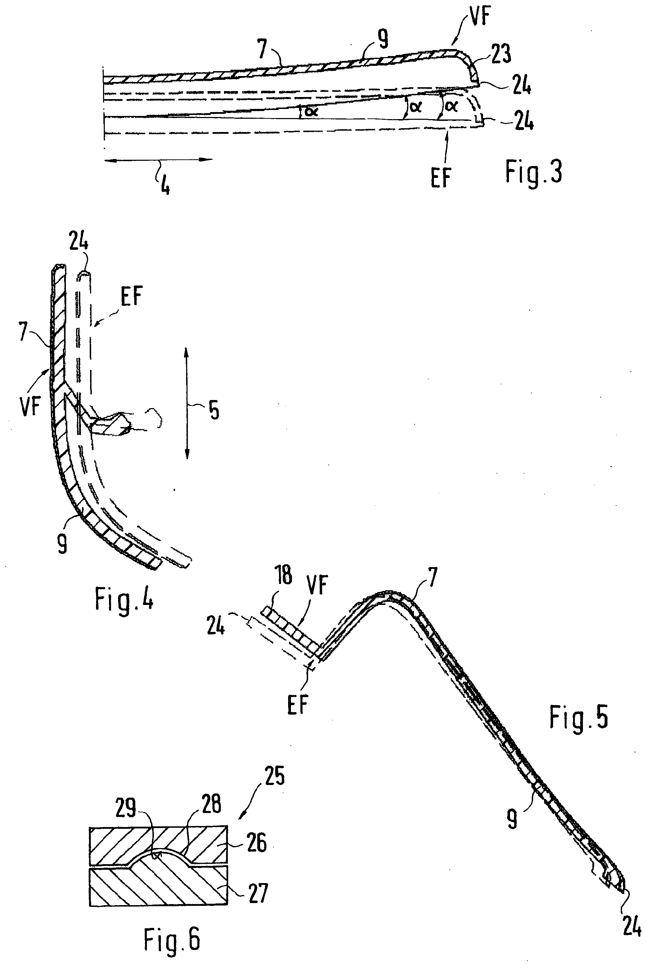

Das Ausstattungsteil 1 ist als Verbundteil ausgeführt und weist an seiner Oberseite 6 eine die Oberfläche bildende Metallfolie 7, insbesondere Edelstahlfolie, auf, die auf einem Kunststoff-Träger 8 angeordnet ist. Der Kunststoff-Träger 8 wird durch Hinterspritzen einer Rückseite 6' der Metallfolie 7 mit dieser verbunden, worauf weiter unten im Zusammenhang mit den Fig. 3 bis 5 näher eingegangen wird. Der Kunststoff-Träger 8 umfasst ein flächiges Trägerbett 9, an dem die Metallfolie 7 mit ihrer Rückseite 6' befestigt ist. Das Trägerbett 9 kann in Richtung der Länge 4 und/oder Breite 5 mit konstantem Querschnitt ausgeführt sein. Vorzugsweise einstückig geht von dem Trägerbett 9 zumindest ein im Querschnitt U-förmiges Abstützelement 10 aus, welches das Trägerbett 9 mit Abstand zu einem darunter liegenden Karosserieelement 11 abstützt. Um das Ausstattungsteil 1 an dem Karosserieelement 11 befestigen zu können, ist ein entsprechendes Befestigungselement 12 vorgesehen, welches beispielsweise als Federklammer ausgeführt sein kann. Das Befestigungselement 12 hintergreift eine Basis 13 des Abstützelements 10 und ragt mit einem Befestigungsabschnitt 14 durch eine Öffnung 15 in der Basis 13 aus dem Abstützelement 10 hervor. Innerhalb des Abstützelements 10 ist für das Befestigungselement 12 noch ein Widerlager in Form eines profilierten Quersteges 16 angeordnet. Wie Fig. 2 zeigt, können mehrere Abstützelemente 10 vorgesehen sein, die für eine schräge Anordnung des Ausstattungsteils 1 eine unterschiedliche Höhe aufweisen können, ansonsten mit Ausnahme des profilierten Quersteges 16 identisch ausgeführt sind. Bei dem in Fig. 2 rechts gezeigten Abstützelement geht der profilierte Quersteg 16' von dem Trägerbett 9 aus und ist im wesentlichen U-förmig ausgeführt, wohingegen der Quersteg 16 sich zwischen den beiden aufrechten Abschnitten 17 des U-förmigen Abstützelements 10 erstreckt. Von dem Trägerbett 9 geht randseitig noch ein Untergriffsabschnitt 18 aus, der ein Verkleidungsteil 19 der Hutablage 3 untergreift. Der Untergriffsabschnitt 18 kann ohne Metallfolie 7 ausgeführt sein. An seinem dem Untergriffsabschnitt 18 gegenüberliegenden Ende besitzt das Ausstattungsteil 1 noch einen Überlappungsabschnitt 20, der auf einem den Kofferraumboden 2 abdeckenden Verkleidungsteil 21 aufliegt. Wie Fig. 1 weiter zeigt, weist die Oberseite 6 eine oder mehrere Erhebungen 22 auf, die mit Abstand zueinander liegen und in Richtung der Breite 5 verlaufen. Diese Erhebungen sind durch Sicken in der Metallfolie 7 ausgebildet und mit dem Kunststoff des Trägerbetts 9 ausgefüllt, das die Metallfolie 7 im wesentlichen vollflächig, also im wesentlichen über die gesamte Rückseite 6' stützt. Der Kunststoff für das Trägerbett 9 bzw. die Abstützelemente 10 ist vorzugsweise ein Polycarbonat.

In den Fig. 1 und 2 ist das Ausstattungsteil 1 in seiner Fertig- bzw. Endform EF gezeigt. Beim Herstellen des Ausstattungsteils 1 wird jedoch der Metallfolie 7 vor dem Hinterspritzen mit dem Kunststoff für das Trägerbett 9 eine gebogene Vorform VF aufgeprägt, die anhand der Schnitte der Fig. 3 bis 5 näher erläutert wird. Die Endform EF ist in den Fig. 3 bis 5 gestrichelt eingezeichnet, wohingegen die von der Endform- EF abweichende Vorform VF in durchgezogener Linie dargestellt ist. Wie aus dem Schnitt gemäß Fig. 3 hervorgeht, weist die Vorform VF eine Biegung bzw. Bombierung in einer ersten Richtung auf, d.h. die Metallfolie 7 ist über die Länge 4 gebogen derart, dass die seitlichen Enden 23 - ausgehend von der Endlage EF - nach oben ausgelenkt sind. Wie die Fig. 3 und 4 zeigen, kann die Biegung entlang der Länge 4 bzw. Breite 5 unterschiedlich stark ausgeprägt sein und insbesondere in Richtung der äußeren Umrandung 24 des Ausstattungsteils 1 im Biegewinkel α zunehmen. Zusätzlich zu den bereits beschriebenen Richtungen für die Biegung in die Vorform VF kann die Metallfolie 7 - entsprechend Fig. 5 - in einer weiteren Richtung gebogen werden, welche weitere Richtung unter einem Winkel, insbesondere schräg, zu den beiden übrigen Richtungen entlang der Länge 4 bzw. Breite 5 aufweist. Insgesamt kann die Metallfolie 7 vor dem Hinterspritzen mit dem Trägerbett 9 also beispielsweise in eine kalottenartige Vorform VF gebracht werden. Zum Hinterspritzen wird eine Metallfolie 7 verwendet, die insbesondere aus Edelstahl besteht und eine Dicke D (siehe Fig. 2) aufweist, die geringer als 1 mm, vorzugsweise geringer als 0,5 mm ist und insbesondere etwa 0,4 mm beträgt.

Zum Herstellen des Ausstattungsteils 1 wird also zunächst die Metallfolie 7 in die Vorform VF gebracht und anschließend mit dem heißen Kunststoff für das Trägerbett 9 hinterspritzt. Hierfür wird vorzugsweise ein Werkzeug 25 verwendet, welches stark vereinfacht und schematisch in Fig. 6 gezeigt ist. Es besitzt eine obere und untere Werkzeughälfte 26 und 27, die aufeinander gelegt eine Kavität 28 begrenzen, in die die Metallfolie 7 eingebracht wird. Der nicht von der Metallfolie 7 ausgefüllte Raum der Kavität 28 wird anschließend mit dem Kunststoff für den Träger 8' hinterspritzt. Dabei ist die Kavität 28 mit ihren Begrenzungswänden 29 so ausgebildet, dass ein gebogener Verlauf entsteht, der der Vorform VF entspricht. Nachdem das fertige Ausstattungsteil 1 aus dem Werkzeug 25 entnommen worden ist und abkühlt, wird es sich - ausgehend von der Vorform VF - selbsttätig in die Fertig- bzw. Endform EF zurückstellen. Insbesondere wird die Vorform VF so gewählt, dass die Endform EF ohne Biegung in einer der Richtungen (Länge 4, Breite 5 und/oder quer dazu) vorliegt.

## Patentansprüche

1. Verfahren zum Herstellen eines Kraftfahrzeug-Ausstattungsteil, bei dem eine Metallfolie im wesentlichen vollflächig mit einem Kunststoff hinterspritzt wird und bei dem das Ausstattungsteil eine Fertig- bzw. Endform aufweist, wobei die Metallfolie (7) vor dem Hinterspritzen in eine zumindest in einer ersten Richtung (4, 5) verlaufende gebogene Vorform (VF) gebracht und auf die so verformte Metallfolie (7) der Kunststoff aufgebracht wird, wobei die Vorform (VF) von der Fertig- bzw. Endform (EF) abweicht, wobei die gebogene Vorform (VF) für die Metallfolie (7) derart gewählt wird, dass einerseits ein Biegewinkel (α) der Vorform (VF) in Richtung einer Umrandung (24) der Metallfolie (7) zunehmend größer gewählt wird und dass andererseits das Kraftfahrzeug-Ausstattungsteil (21) beim Abkühlen in die gewünschte Fertig- bzw. Endform (EF) ohne Biegung in zumindest der ersten Richtung (4, 5), in welcher die Biegung der gebogenen Vorform (VF) verläuft, selbsttätig zurückstellt.

2. Verfahren nach Anspruch 1, **dadurch gekennzeichnet, dass** die Metallfolie (7) in ihrer Vorform (VF) zusätzlich in einer zweiten Richtung gebogen ist.

3. Verfahren nach Anspruch 1, **dadurch gekennzeichnet, dass** als Kunststoff zum Hinterspritzen ein Polycarbonat verwendet wird.

4. Verfahren nach Anspruch 1, **dadurch gekennzeichnet, dass** als Metallfolie (7) eine Edelstahlfolie verwendet wird.

5. Verfahren nach Anspruch 1, **dadurch gekennzeichnet, dass** die Metallfolie (7) eine Dicke (D) aufweist, die geringer als 1 mm, vorzugsweise geringer als 0,5 mm ist, und insbesondere etwa 0,4 mm beträgt.

6. Verfahren nach Anspruch 1, **dadurch gekennzeichnet, dass** die Metallfolie (7) eine gegenüber der Breite (5) wesentlich größere Länge (4) aufweist.

## Claims

1. Process for manufacturing an automotive component part, in which a metal foil is overmoulded essentially over its full surface area by a plastic and in which the component part has a finished or final form, wherein, before the overmoulding, the metal foil (7) is brought into a bent preliminary form (VF), extending at least in a first direction (4, 5), and the plastic is applied to the metal foil (7) deformed in this way, wherein the preliminary form (VF) differs from the finished or final form (EF), wherein the bent preliminary form (VF) for the metal foil (7) is chosen such that on the one hand a bending angle (α) of the preliminary form (VF) is chosen to be increasingly greater in the direction of a peripheral border (24) of the metal foil (7) and that on the other hand, when it cools down, the automotive component part (21) reverts to the desired finished or final form (EF) of its own accord without bending in at least the first direction (4, 5), in which the bend of the bent preliminary form (VF) extends.

2. Process according to Claim 1, **characterized in that**, in its preliminary form (VF), the metal foil (7) is additionally bent in a second direction.

3. Process according to Claim 1, **characterized in that** a polycarbonate is used as the plastic for the overmoulding.

4. Process according to Claim 1, **characterized in that** a high-grade steel foil is used as the metal foil (7).

5. Process according to Claim 1, **characterized in that** the metal foil (7) has a thickness (D) which is less than 1 mm, preferably less than 0.5 mm, and in particular is approximately 0.4 mm.

6. Process according to claim 1, **characterized in that** the metal foil (7) has a much greater length (4) in comparison with the width (5).

## Revendications

1. Procédé de fabrication d'une pièce d'équipement de véhicule automobile, dans lequel une feuille métallique est pourvue sur l'arrière essentiellement sur toute sa surface d'un surmoulage de plastique et dans lequel la pièce d'équipement présente une forme finie ou une forme finale, la feuille métallique (7), avant le surmoulage sur l'arrière, étant amenée à une forme préalable cintrée (VF) s'étendant au moins dans une première direction (4, 5) et le plastique étant appliqué sur la feuille métallique (7) ainsi préformée, la forme préalable (VF) s'écartant de la forme finie ou finale (EF), la forme préalable cintrée (VF) pour la feuille métallique (7) étant choisie de telle sorte que d'une part un angle de cintrage (α) de la forme préalable (VF) soit sélectionné de manière à augmenter dans la direction d'un bord (24) de la feuille métallique (7) et que d'autre part la pièce d'équipement de véhicule automobile (21), lors du refroidissement, revienne automatiquement à la forme finale ou finie souhaitée (EF) sans cintrage dans au moins la première direction (4, 5) dans laquelle s'étend le cintrage de la forme préalable cintrée (VF).

2. Procédé selon la revendication 1, **caractérisé en ce que** la feuille métallique (7) dans sa forme préalable (VF) est en outre cintrée dans une deuxième direction.

3. Procédé selon la revendication 1, **caractérisé en ce que** l'on utilise un polycarbonate en tant que plastique pour le surmoulage par l'arrière.

4. Procédé selon la revendication 1, **caractérisé en ce que** l'on utilise en tant que feuille métallique (7) une feuille en acier inoxydable.

5. Procédé selon la revendication 1, **caractérisé en ce que** la feuille métallique (7) présente une épaisseur (D) inférieure à 1 mm, de préférence inférieure à 0,5 mm, et notamment d'environ 0,4 mm.

6. Procédé selon la revendication 1, **caractérisé en ce que** la feuille métallique (7) présente une longueur (4) considérablement plus grande que sa largeur (5).
